# EUROPEAN PATENT SPECIFICATION

(11) **EP 2 320 507 B1**
(45) Date of publication and mention of the grant of the patent: **09.05.2012**
(21) Application number: 10251826.3
(22) Date of filing: 20.10.2010
(51) Int. Cl.: H01M 8/24, H01M 8/02

(54) **Bonding member**
Verbindungselement
Élément de liaison

(30) Priority: 09.11.2009 JP 2009256537
(43) Date of publication of application: 11.05.2011
(73) Proprietor: NGK Insulators, Ltd., Nagoya-City, Aichi Pref. 467-8530 (JP)
(72) Inventor: Ohmori, Makoto, Aichi-ken, 467-8530 (JP); Nakamura, Toshiyuki, Aichi-ken, 467-8530 (JP); Ryu, Takashi, Aichi-ken, 467-8530 (JP)
(74) Representative: Paget, Hugh Charles Edward

(56) References cited:
- EP-A1- 1 786 056
- EP-A1- 2 224 516
- WO-A1-97/28572
- US-A1- 2007 134 540

## Description

### BACKGROUND OF THE INVENTION

### Field of the Invention:

The present invention relates to a bonding member having two connection conductive members bonded to each other by a bonding agent.

### Description of the Related Art:

A cell (single cell) of a solid oxide fuel cell (SOFC) includes a solid electrolyte, a fuel electrode formed integral with the solid electrolyte, and an air electrode formed integral with the solid electrolyte. A fuel gas (hydrogen gas, etc.) is supplied to the fuel electrode of the SOFC cell and a gas (air, etc.) containing oxygen is supplied to the air electrode of the SOFC cell, whereby a chemical reaction represented by Formulas (1) and (2) described below is generated. Thus, a potential difference is produced between the fuel electrode and the air electrode.

(1/2) · O₂ + 2^{e-} → O²⁻ (at air electrode) (1)

H₂ + O²⁻ → H₂O + 2^{e-} (at fuel electrode) (2)

In the SOFC, a conductive connection member (hereinafter referred to as interconnector) for collecting electric current is bonded and fixed to each of the fuel electrode and the air electrode with a bonding agent. Power based upon the potential difference is taken out to the outside through the respective interconnectors. Attention is particularly focused on the bonding between the air electrode and the interconnector below.

An expensive Pt material has conventionally been used as the bonding agent to bond the air electrode and the interconnector so as to electrically connect the air electrode and the interconnector. A silver material from a metal and a conductive ceramic material from a ceramic are considered as a substitute material for the Pt material in order to reduce cost. For example, Japanese Unexamined Patent Application No. 2005-339904 discloses La-Sr-Co-Fe perovskite complex material as a conductive ceramic material for fixedly bonding the air electrode and the interconnector.

### SUMMARY OF THE INVENTION

A ferritic stainless steel (ferritic SUS material) containing Fe and Cr is generally used as the material for the interconnector at the side of the air electrode. The present inventor has focused an attention on a transition metal oxide (e.g., MnCo₂O₄, CuMn₂O₄) having a spinel type crystal structure as the conductive ceramic material that bonds the air electrode and the interconnector so as to electrically connect the air electrode and the interconnector. The conductive spinel type oxide is slightly poor in conductivity but excellent in sintering performance compared to the above-mentioned perovskite oxide.

When the spinel type material is used as the bonding agent, a paste, which is a precursor of the bonding agent, is interposed between the air electrode (the bonding portion of the air electrode) and the interconnector (the bonding portion of the interconnector), and with this state, the paste is sintered. Thus, a bonding member is obtained in which the air electrode and the interconnector are bonded and electrically connected by the bonding agent that is a sintered body.

In the bonding member described above, it is preferable that the bonding strength is high. The present inventor has found a bonding member obtained by bonding two conductive connection members (one of them is made of a metal containing Fe and Cr) with the use of a bonding agent having a spinel type material, the bonding member having high bonding strength between the "conductive connection member made of a metal containing Fe and Cr" and the bonding agent.

Specifically, the bonding member according to the present invention includes a first conductive connection member made of a metal (e.g., ferritic stainless steel) containing Fe and Cr, a second conductive connection member that is different from the first conductive connection member, and a bonding member that is made of a transition metal oxide having a spinel type crystal structure represented by AB₂O₄ (A: at least one type of metal element selected from Mn and Cu, B: at least one type of metal element selected from Co and Mn), that bonds the first and second conductive connection members, and that electrically connects the first and second conductive connection members.

Here, the second conductive connection member is an air electrode in a cell of a solid oxide fuel cell that includes a solid electrolyte, a fuel electrode, which is arranged integral with the solid electrolyte and allows a fuel gas to react through the contact with the fuel gas, and an air electrode, which is arranged integral with the solid electrolyte and allows a gas containing oxygen to react through the contact with the gas containing oxygen. The first conductive connection member is an interconnector that electrically connects the air electrode and an external conductive member.

The bonding member according to the present invention has features as described below. Specifically, a first layer having a thickness of 1 to 7 µm, and including (only) elements of A, B, Fe, Cr, and O is interposed at the bonding portion between the bonding agent and the first conductive connection member, wherein the range of a Cr concentration in the first layer is 0.1 to 0.5 times the average value of the Cr concentration in the first conductive connection member. The "Cr concentration" means a mass concentration or a volume concentration of Cr (chrome).

More specifically, a chromia layer having a thickness of 1 to 5 µm and containing (only) Cr₂O₃ is interposed at the side closer to the first conductive connection member than the first layer, wherein the maximum value of the Cr concentration in the chromia layer falls within the range 1.5 to 4 times the average value of the Cr concentration in the first conductive connection member. The numerical value (1 to 5 µm) of the thickness of the chromia layer is the value under the condition immediately after the bonding member is manufactured (immediately after the assembly of the solid oxide fuel cell is completed), or under the condition in which a total time when the bonding member is exposed to a high-temperature environment corresponding to the working temperature of the solid oxide fuel cell (a total working time of the solid oxide fuel cell) is within 100 hours. The thickness of the chromia layer increases as the total time when the bonding member is exposed to the high-temperature environment (the total working time of the solid oxide fuel cell) increases.

Further, a second layer having a thickness of 3 to 10 µm and containing (only) elements of A, B, Fe, and O is interposed at the side closer to the bonding agent than the first layer, wherein the maximum value of the Cr concentration in the second layer is smaller than the minimum value of the Cr concentration in the first layer (including zero).

The bonding agent in the bonding member according to the present invention is characterized by having a co-continuous structure and containing (one or more) particles, each of which is a spherical particle having plural crystal surfaces exposed to the front surface and having a side with a length of 1 µm or more among plural sides constituting the outline of the crystal surface. Here, the "co-continuous structure" is not a point-contact structure in which ceramic particles are collected and the contact points of the adjacent particles are connected with the sintering, but the structure in which many base portions from which two or more (thick) arm portions extend are three-dimensionally (stereoscopically) arranged, and the arm portions extending from the different base portions are three-dimensionally (stereoscopically) connected to each other so as to allow many base portions to be three-dimensionally (stereoscopically) connected to one another through the arm portions (in a network form). In the co-continuous structure, gaps (pores) that are three-dimensionally (stereoscopically) continuous (in a network form) are formed at the region except for the base portions and the arm portions. The co-continuous structure can be restated as a three-dimensional network structure. When plural particles described above are contained in the bonding agent, it is preferable that each particle has a side with a length of 1 µm or more among the plural sides constituting the outline of the crystal face.

In the co-continuous structure, the thickness of the arm portion that links many base portions to one another is preferably 0.3 to 2.5 µm. The diameter of the particle is preferably 5 to 80 µm. The transition metal oxide preferably contains at least one of MnCo₂O₄ and CuMn₂O₄.

The bonding agent having the co-continuous structure made of the spinel type material can be formed by sintering a paste, containing the powders of the respective A and B elements, with this paste being interposed between the first and second conductive connection members. When the bonding agent made of the spinel type material is formed by oxidizing the powders of the respective metal elements serving as the starting material upon the sintering, the bonding agent (sintered body) can sufficiently be densified, even if the sintering temperature is set to be relatively low (e.g., 700 to 900 °C).

It has been found that the bonding member having the above-mentioned feature according to the present invention has a sufficiently high bonding strength between the first conductive connection member (= made of a metal containing Fe and Cr) and the bonding agent (made of the spinel type material).

The bonding agent in the bonding member according to the present invention may include a noble metal in addition to the transition metal oxide. Examples of the noble metal include Pt, and Ag. The electric resistance of the bonding agent can be reduced by containing the noble metal into the bonding agent.

### BRIEF DESCRIPTION OF THE DRAWINGS

Various other objects, features and many of the attendant advantages of the present invention will be readily appreciated as the same becomes better understood by reference to the following detailed description of the preferred embodiment when considered in connection with the accompanying drawings, in which:
FIG. 1 is a schematic diagram illustrating an SOFC cell including a "bonding member having an air electrode of an SOFC cell and an interconnector bonded to each other" according to the present embodiment;
FIG. 2 is a diagram illustrating the bonding agent included in the bonding member according to the present embodiment as observed at a magnification of 1000 with a scanning electron microscope;
FIG. 3 is a diagram illustrating the bonding agent included in the bonding member according to the present embodiment as observed at a magnification of 5000 with a scanning electron microscope;
FIG. 4 is a diagram illustrating the bonding agent included in the bonding member according to the present embodiment as observed at a magnification of 10000 with a scanning electron microscope;
FIG. 5 is a diagram illustrating the bonding agent included in the bonding member according to the present embodiment as observed at a magnification of 5000 with a scanning electron microscope;
FIG. 6 is a diagram illustrating the bonding agent included in the bonding member according to the present embodiment as observed at a magnification of 10000 with a scanning electron microscope;
FIG. 7 is a diagram illustrating one example of an image of the cross-section of the vicinity of the bonding portion between the interconnector and the bonding agent in the bonding member according to the present embodiment as observed at a magnification of 2000 with an electron emission type analytical electron microscope;
FIG. 8 is a partial image including the bonding portion in the image illustrated in FIG. 7;
FIG. 9 is an image in which a mapping of oxygen is carried out for the portion corresponding to the image illustrated in FIG. 8;
FIG. 10 is an image in which a mapping of manganese is carried out for the portion corresponding to the image illustrated in FIG. 8;
FIG. 11 is an image in which a mapping of cobalt is carried out for the portion corresponding to the image illustrated in FIG. 8;
FIG. 12 s an image in which a mapping of iron is carried out for the portion corresponding to the image illustrated in FIG. 8;
FIG. 13 s an image in which a mapping of chrome is carried out for the portion corresponding to the image illustrated in FIG. 8;
FIG. 14 is a graph illustrating a transition of Cr concentration in the thickness direction at the portion corresponding to the image illustrated in FIG. 8;
FIG. 15 is a diagram illustrating a bonding agent according to a comparative example as observed at a magnification of 5000 with a scanning electron microscope;
FIG. 16 is a diagram illustrating the bonding agent according to the comparative example as observed at a magnification of 10000 with a scanning electron microscope;
FIG. 17 is a diagram illustrating one example of an image of the cross-section of the vicinity of the bonding portion between the interconnector and the bonding agent in the bonding member according to the comparative example as observed at a magnification of 2000 with an electron emission type analytical electron microscope;
FIG. 18 is a partial image including the bonding portion in the image illustrated in FIG. 17;
FIG. 19 is an image in which a mapping of oxygen is carried out for the portion corresponding to the image illustrated in FIG. 18;
FIG. 20 is an image in which a mapping of manganese is carried out for the portion corresponding to the image illustrated in FIG. 18;
FIG. 21 is an image in which a mapping of cobalt is carried out for the portion corresponding to the image illustrated in FIG. 18;
FIG. 22 s an image in which a mapping of iron is carried out for the portion corresponding to the image illustrated in FIG. 18;
FIG. 23 is an image in which a mapping of chrome is carried out for the portion corresponding to the image illustrated in FIG. 18;
FIG. 24 is a graph illustrating a transition of Cr concentration in the thickness direction at the portion corresponding to the image illustrated in FIG. 18;
FIG. 25 is a schematic diagram illustrating the configuration of a sample for an evaluation of bonding strength; and
FIG. 26 is a schematic diagram illustrating a configuration when the sample illustrated in FIG. 25 is subject to a tensile test.

### DESCRIPTION OF THE PREFERRED EMBODIMENT

### (Structure)

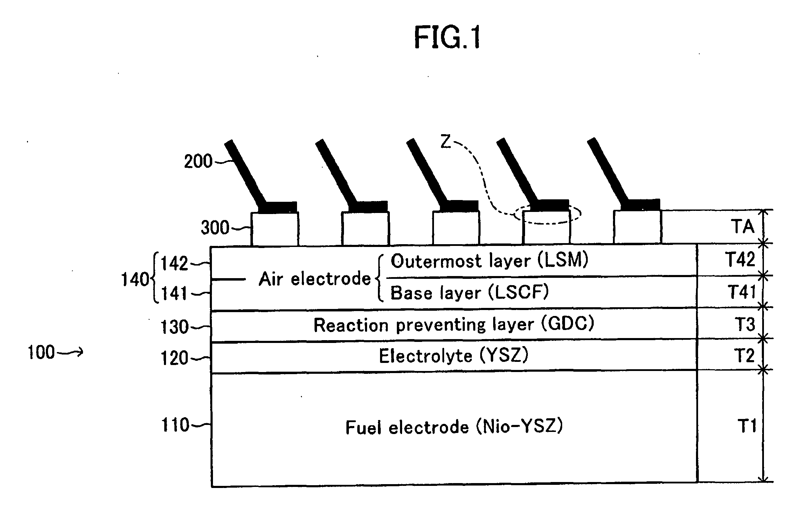

FIG. 1 illustrates one example of a structure of a "bonding member having an air electrode of an SOFC cell and an interconnector bonded to each other by a bonding agent" according to the embodiment of the present invention. In the bonding member illustrated in FIG. 1, an SOFC cell 100 is a stacked body including a fuel electrode 110, an electrolyte 120 stacked on the fuel electrode 110, a reaction preventing layer 130 stacked on the electrolyte 120, and an air electrode 140 stacked on the reaction preventing layer 130. The shape of the cell 100 viewed from the top is, for example, a square having a side of 1 to 10 cm, a rectangle having a long side of 5 to 30 cm and a short side of 3 to 15 cm, or a circle having a diameter of 10 cm.

The fuel electrode 110 (anode electrode) is, for example, a porous sintered body having a thin plate-like shape composed of nickel oxide NiO and yttria stabilized zirconia YSZ. The thickness T1 of the fuel electrode 110 is 0.3 to 3 mm. The thickness of the fuel electrode 110 is the greatest among the respective components of the cell 100, so that the fuel electrode 110 serves as a support substrate of the cell 100.

The electrolyte 120 is a dense sintered body having a thin plate-like shape composed of YSZ. The thickness T2 of the electrolyte 120 is 3 to 30 µm.

The reaction preventing layer 130 is a dense sintered body having a thin plate-like shape composed of celia. Specific examples of celia include GDC (gadolinium-doped celia), SDC (samarium-doped celia), etc. The thickness T3 of the reaction preventing layer 130 is 3 to 20 µm. The reaction preventing layer 130 is interposed between the electrolyte 120 and the air electrode layer 140 in order to prevent the occurrence of the phenomenon in which an electric resistance between the electrolyte 120 and the air electrode 140 increases through the reaction between the zirconium in the electrolyte 120 and the strontium in the air electrode 140 during the fabrication of the cell or in the cell 100, which is currently operated, of the SOFC.

The air electrode 140 (cathode electrode) (corresponding to the "second conductive connection member") includes two layers, which are a base layer 141 and an outermost layer 142. The base layer 141 is a porous sintered body having a thin plate-like shape and made of lanthanum strontium cobalt ferrite LSCF (La_{0.6}Sr_{0.4}Co_{0.2}Fe_{0.8}O₃). The outermost layer 142 is a porous sintered body having a thin plate-like shape and having a perovskite structure containing manganese. The outermost layer 142 is made of, for example, lanthanum strontium manganite LSM (La_{0.8}Sr_{0.2}MnO₃), lanthanum manganite LM (LaMnO₃), etc. At the air electrode 140, the thickness T41 of the base layer 141 is 5 to 50 µm, and the thickness T42 of the outermost layer 142 is 5 to 50 µm.

The reason why the air electrode 140 has two-layer structure is based upon the fact that the reaction speed of the LSCF of the chemical reaction represented by the formula (1) is higher than that of the LSM because the activity of the LSCF is higher than that of the LSM, and upon the fact that the bonding strength of the LSM to the bonding agent, containing the spinel type material is greater than that of the LSCF. Specifically, the air electrode layer 140 includes two layers in order to increase the reaction speed for the chemical reaction represented by the formula (1) in the air electrode 140 and to increase the bonding strength between the air electrode and the bonding agent.

In the present embodiment, the base layer 141 includes only one layer that is the LSCF layer. However, the base layer 141 may include plural layers. For example, the base layer 141 may include two layers, which are the LSCF layer (air electrode) stacked on the reaction preventing layer 130 and a lanthanum strontium cobalt LSC (La_{0.8}Sr_{0.2}CoO₃) layer (current-collecting layer) stacked on the LSCF layer (i.e., interposed between the LSCF layer and the outermost layer (LSM layer) 142). Further, an LSCF layer (thermal stress buffer layer) may be interposed between the LSC layer and the outermost layer (LSM layer) 142 (i.e., the base layer 141 may include three layers). Instead of the LSCF, LSC, lanthanum strontium ferrite LSF (La_{0.8}Sr_{0.2}FeO₃), lanthanum nickel ferrite LNF (LaNi_{0.6}Fe_{0.4}O₃), etc. may be used as the material of the air electrode.

The interconnector 200 (corresponding to the "first conductive connection member" is a conductive connection member made of a ferritic SUS material (ferritic stainless steel containing Fe and Cr). The bonding portion of each of the plural interconnectors 200, each having the same shape, and the bonding portion of the outermost layer (i.e., LSM layer) of the air electrode 140 in the cell 100 is bonded and electrically connected by the bonding agent 300.

The bonding agent 300 is a sintered body made of a transition metal oxide having a spinel type crystal structure. The transition metal oxide is represented by a chemical formula of AB₂O₄ (A: at least one type of metal element selected from Mn and Cu, B: at least one type of metal element selected from Co and Mn). For example, the bonding agent 300 is made of MnCo₂O₄, CuMn₂O₄, etc. The thickness TA of the layer of the bonding agent 300 is 20 to 500 µm. A noble metal such as Pt or Ag may be contained in the bonding agent 300. The electric resistance of the bonding agent can be reduced by containing the noble metal into the bonding agent 300.

### (Fabrication Process)

Next, one example of a method of fabricating the bonding member illustrated in FIG. 1 will be described below. Firstly, one example of fabricating the cell 100 will be described.

The fuel electrode layer 110 is formed as described below. Specifically, 60 parts by weight of NiO powder, and 40 parts by weight of YSZ powder are mixed, and polyvinyl alcohol (PVA) is added to the mixture as a binder, whereby slurry is prepared. This slurry is dried and granulated with a spray dryer to obtain powders for the fuel electrode. The powders are molded with a die press molding, and then, the resultant is sintered in an electric furnace at 1400 °C for 3 hours in air, whereby the fuel electrode 110 is fabricated.

The electrolyte 120 is formed on the fuel electrode 110 as described below. Specifically, water and binder are added into YSZ powder, and the resultant mixture is mixed with a ball mill for 24 hours to prepare slurry. This slurry is applied on the fuel electrode 110, dried, and then, co-sintered in an electric furnace at 1400 °C for 2 hours in air, whereby the electrolyte 120 is formed on the fuel electrode 110. When the film, which is to become the electrolyte 120 afterward, is formed on the fuel electrode 110, a tape staking method, printing method, etc. may be used.

The reaction preventing layer 130 is formed on the electrolyte 120 as described below. Specifically, water and binder are added into GDC powder, and the resultant mixture is mixed with a ball mill for 24 hours to prepare slurry. The slurry is applied on the electrolyte 120, dried, and then, sintered in an electric furnace at 1350 °C for 1 hour in air, whereby the reaction preventing layer 130 is formed on the electrolyte 120. When a film, which is to become the reaction preventing layer 130 afterward, is formed on the electrolyte 120, a tape staking method, printing method, etc. may be used. The reaction preventing layer 130 may be formed with co-sintering.

The base layer 141 of the air electrode 140 is formed on the reaction preventing layer 130 as described below. Specifically, water and binder are added into LSCF powder, and the resultant mixture is mixed with a ball mill for 24 hours to prepare slurry. The slurry is applied on the reaction preventing layer 130, dried, and then, sintered in an electric furnace at 1000 °C for 1 hour in air, whereby the air electrode 140 is formed on the reaction preventing layer 130.

The outermost layer 142 is formed on the base layer 141 as described below. Specifically, water and binder are added into LSM powder, and the resultant mixture is mixed with a ball mill for 24 hours to prepare slurry. The slurry is applied on the base layer 141, dried, and then, co-sintered in an electric furnace at 1000 °C for 1 hour in air, whereby the outermost layer 142 is formed on the base layer 141. One example of the method of fabricating the cell 100 has been described above.

The interconnector 200 is formed by processing a ferritic SUS material into a predetermined shape by a machining process. Plural interconnectors 200, each having the same shape, are prepared.

The outermost layer 142 and the interconnector 200 are bonded by the bonding agent 300 as described below. The case in which the spinel type material is MnCo₂O₄ will be described as one example. Firstly, metal powder of manganese Mn and metal powder of cobalt Co are weighed and mixed with a molar ratio of 1:2. The diameter of the metal powder is 0.5 to 5 µm, and the average diameter is 2 µm. A noble metal powder such as Pt or Ag may be added thereto. Ethyl cellulose serving as binder and terpineol serving as a solvent are added to the mixture, according to need, and the resultant mixture is mixed in a mortar to form a paste used for bonding. The bonding paste is applied onto the bonding portion between the surface of the outermost layer 142 (i.e., LSM layer) of the air electrode 140 in the cell 100 and the interconnector 200, whereby the outermost layer 142 and the interconnector 200 are bonded to each other. Thereafter, this paste is dried at 100 °C for 1 hour, and then, sintered in air for 1 hour at a relatively low temperature of 850 °C, whereby the bonding agent 300, which is a sintered body, is formed.

Specifically, powders of the respective metal elements constituting the spinel type material are used as a starting material, and the powders are oxidized upon the sintering, whereby the bonding agent 300 having the spinel type material is formed. The reason why the paste is sufficiently densified even if the sintering temperature of the paste is relatively low is considered to be based upon the fact that the spinel type crystal (crystal of complex oxide) is combined and grown due to the local temperature rise on the surface of the powder by the heat generated from the oxidation reaction (= heat-generating reaction) of the powder of the respective metal elements. The outermost layer 142 and the interconnector 200 are bonded and electrically connected with this bonding agent 300. One example of the method of fabricating "the bonding member having the air electrode in the SOFC cell and the interconnector bonded to each other" illustrated in FIG. 1 according to the present embodiment has been described above.

Japanese Unexamined Patent Application No. 2009-16351 discloses that an air electrode made of manganese spinel compound is bonded to a metal interconnector with a bonding agent made of a manganese spinel compound (see especially paragraph 0029). However, this application not at all discloses the specific embodiment. A manganese compound is generally produced in such a manner that powders of manganese oxide and powders of cobalt oxide are mixed with a spinel ratio, and the resultant mixture is sintered. Specifically, the fabrication method of the bonding agent 300 according to the present embodiment is totally different from the fabrication method of a normal manganese spinel compound.

### (Feature of Bonding Agent)

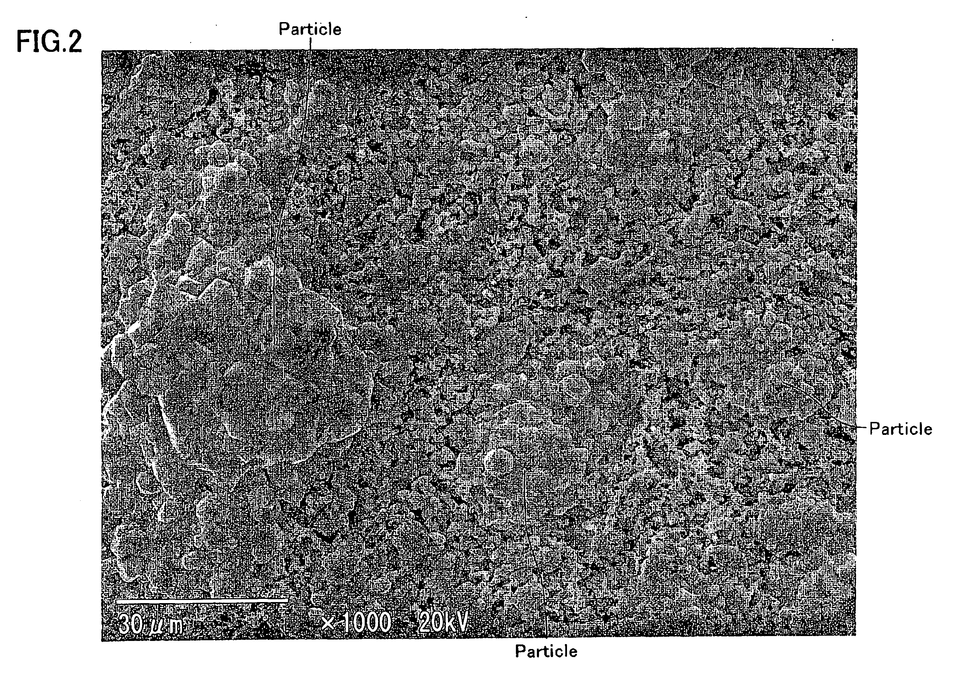

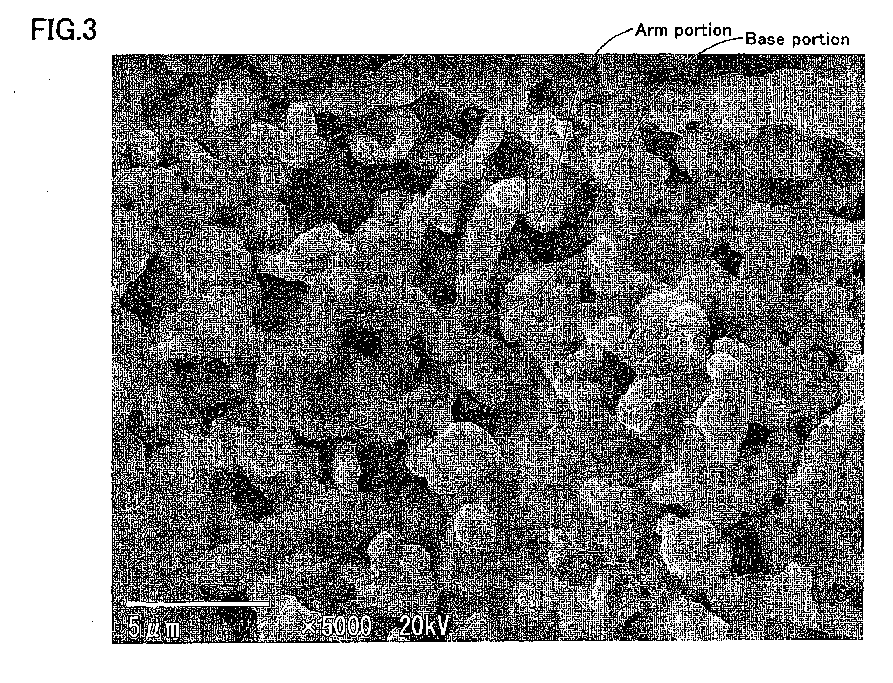

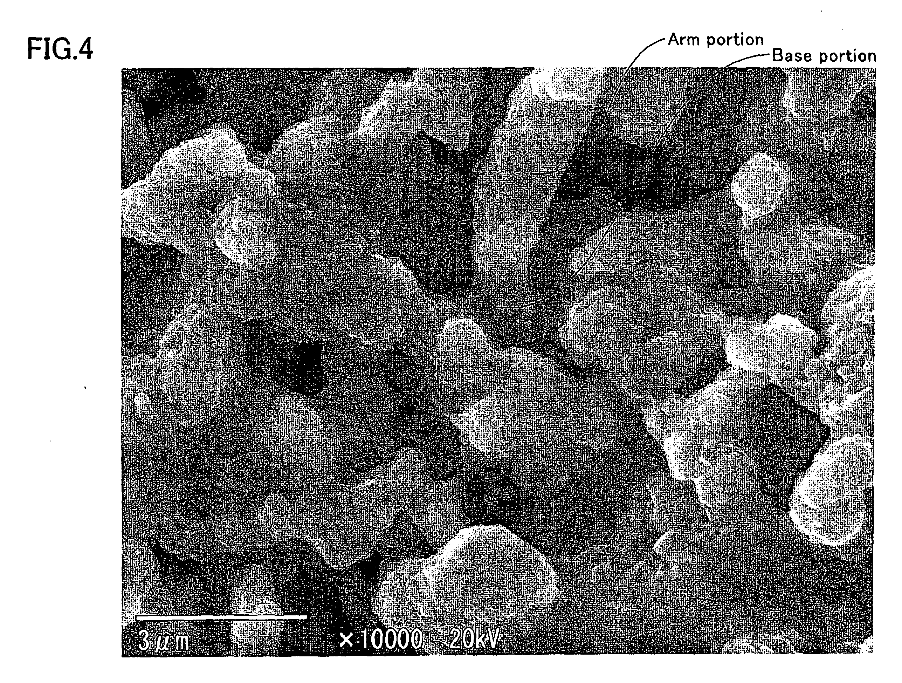

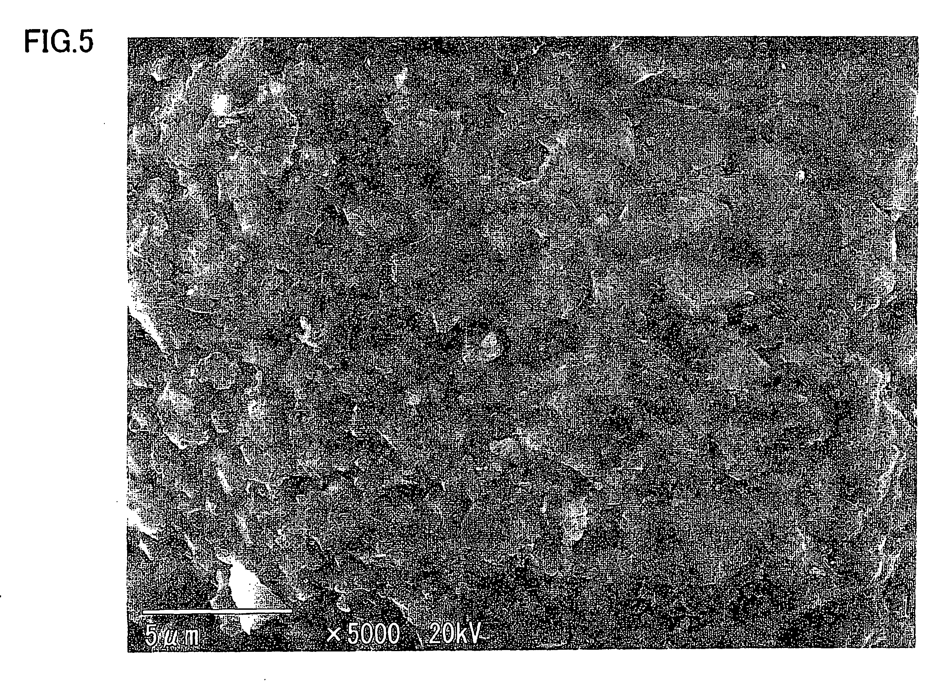

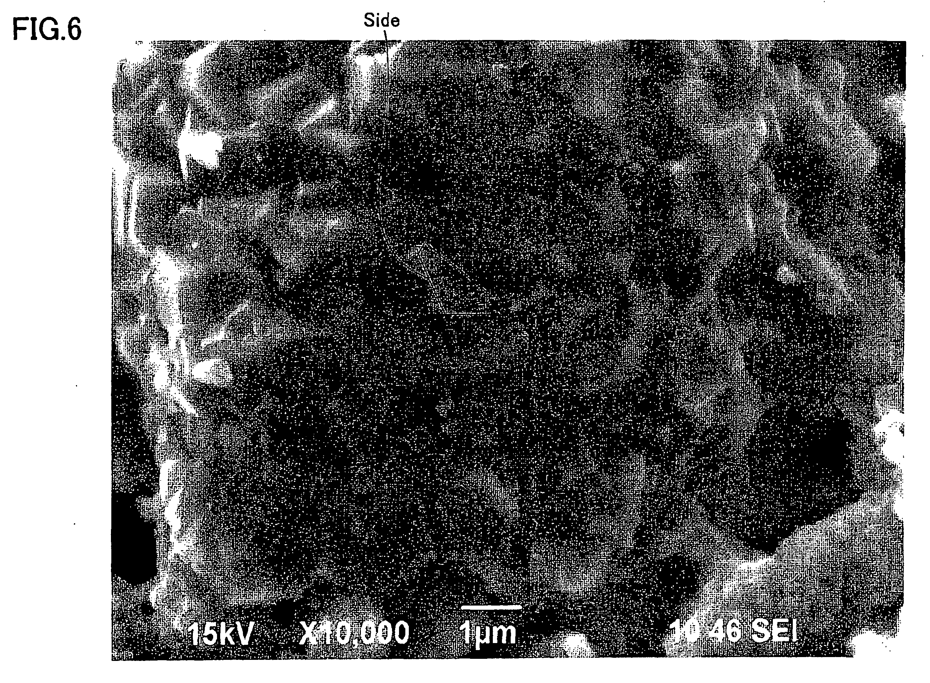

Next, the feature of the bonding agent 300 according to the present embodiment, i.e., the feature of the bonding agent that is produced in such a manner that the powders of the respective metal elements (starting material) constituting the spinel type material (MnCo₂O₄) is oxidized during the sintering, will be described with reference to FIGS. 2 to 6. FIG. 2 is a view (SEM image) illustrating the surface of the bonding agent 300 that is observed at a magnification of 1000, FIGS. 3 and 5 are views (SEM images) illustrating the surface of the bonding agent 300 that is observed at a magnification of 5000, and FIGS. 4 and 6 are views (SEM images) illustrating the surface of the bonding agent 300 that is observed at a magnification of 10000, with the use of a scanning electron microscope (SEM).

As apparent from FIGS. 3 and 4, the bonding agent 300 has a "co-continuous structure". In the "co-continuous structure", a thickness of an "arm portion" that three-dimensionally (stereoscopically) links many "base portions" (the portions from which two or more arm portions extend) is 0.3 to 2.5 µm. The "thickness of the arm portion" is calculated as described below in the present embodiment. Specifically, 10 portions having the co-continuous structure are firstly extracted randomly from the SEM image. Three data pieces each for the respective portions involved with the thickness of the arm portion measured from the extracted portions are collected. The "thickness of the arm portion" is calculated based upon the obtained 30 data pieces in total. It is considered that the formation of the "co-continuous structure" is related to the above-mentioned "growth action of the spinel type crystal due to the heat generated by the oxidation reaction during when the paste is sintered".

As can be understood from FIGS. 2, 5, and 6, the bonding agent 300 includes spherical plural particles, each of which has plural crystal faces exposed to the surface. These particles are dispersed in the "co-continuous structure". The diameter of each of the plural particles is 5 to 80 µm. Here, as "the diameter of the particle", the longest one of the linear distances (the length corresponding to the diameter) passing through the center of the spherical particle in the particle is adopted. Further, the plural particles include at least one or more particles having a side of 1 µm or more of plural sides constituting the outline of the crystal surface (see FIG. 6). The formation of the "particle" is also considered to be related to the above-mentioned "growth action of the spinel type crystal due to the heat generated by the oxidation reaction during when the paste is sintered".

As described above, in the above-mentioned embodiment, the bonding agent having the above-mentioned feature is synthesized by using a metal as a starting material, and by utilizing a reaction heat during the heat treatment. Instead of this, an organic metal may be used as the starting material. For example, di-i-propoxymanganese(ii) (chemical formula: Mn(O-i-C₃H₇)₂) as an organic metal containing manganese, di-i-propoxycobalt(II) (chemical formula: Co(O-i-C₃H₇)₂) as an organic metal containing cobalt, and bis(dibivalloyl metanate) copper (chemical formula: Cu(C₁₁H₁₈O₂)₂) as an organic metal containing copper, can be used.

### (Feature of bonding portion between bonding agent and interconnector)

The feature of the bonding portion between the bonding agent 300 and the interconnector 200 in the bonding member according to the present embodiment will next be described. In the description below, MnCo₂O₄ is used as the spinel type material constituting the bonding agent 300 (see Z portion in FIG. 1), and ferritic stainless steel (SUS) of ZMG232L (commercial name) for an SOFC made by Hitachi Metals Ltd. is used as the material of the interconnector 200.

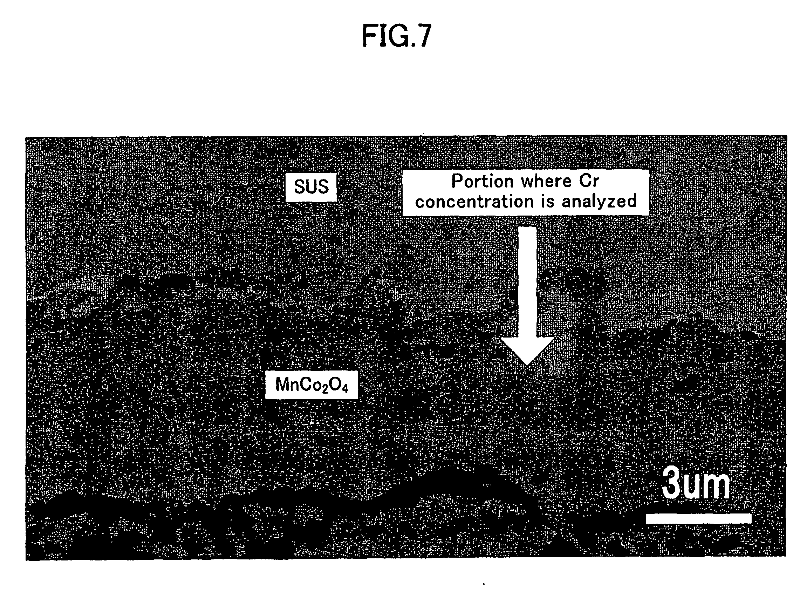

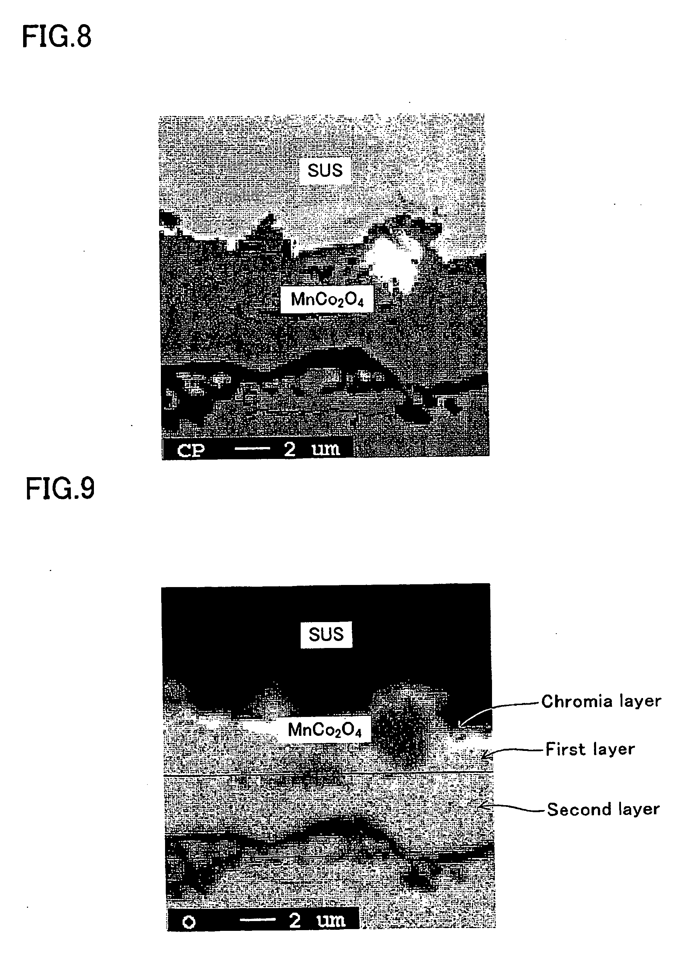

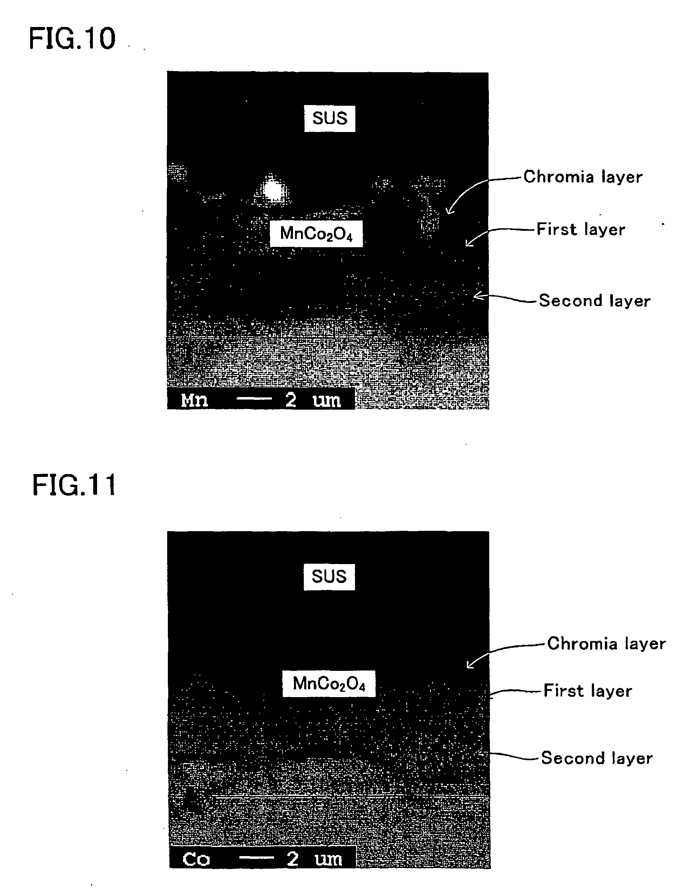

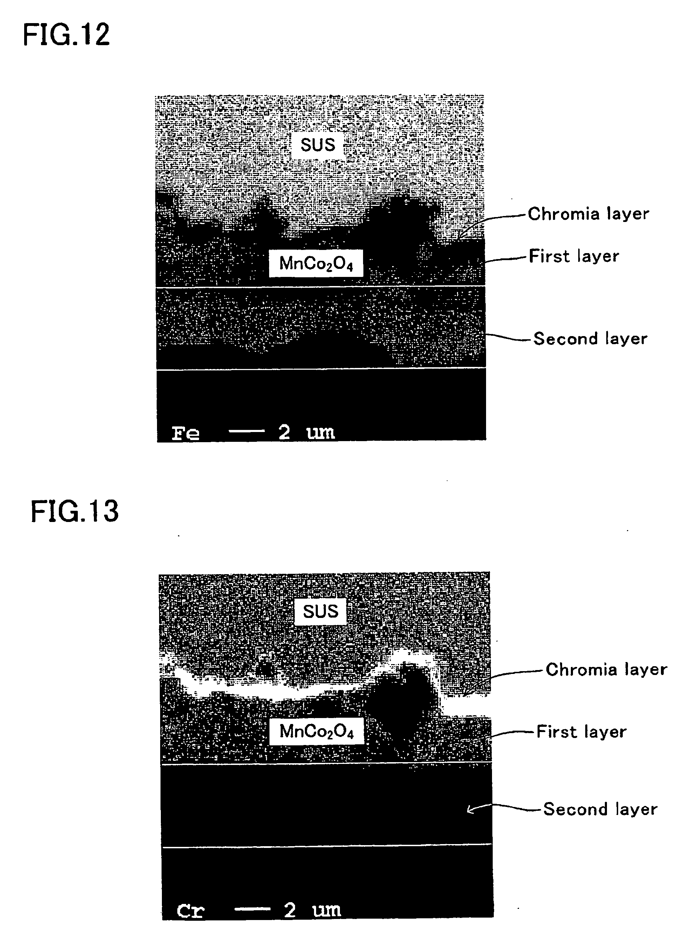

FIG. 7 is one example of an image of a cross-section of the vicinity of the bonding portion as observed at a magnification of 2000 with an electron emission type analytical electron microscope. The element contained in the bonding portion is analyzed. The result is as described below. FIG. 8 is a partial image including the bonding portion in the image in FIG. 7. An element analysis (element mapping) is carried out for the portion corresponding to the image in FIG. 8. FIGS. 9 to 13 respectively illustrate the results of the mapping of O (oxygen), the mapping of Mn (manganese), the mapping of Co (cobalt), the mapping of Fe (iron), and the mapping of Cr (chrome). In FIGS. 9 to 13, the black and white colors in the images represent an element concentration, wherein the portion having a light black and white color (white portion) indicates that the element concentration is great, while the portion having a dark black and white color (black portion) indicates that the element concentration is small. These images and analytical results are acquired with the use of a field-emission-type analytical microscope (JXA-8500F) made by JEOL Ltd.

As can be understood from FIGS. 9 to 13, three layers are interposed at the bonding portion between the bonding agent 300 and the interconnector 300. Of these three layers, the layer that is the closest to the interconnector 200 mainly contains Cr and O. Specifically, this layer can be said to be the layer containing a chromia (Cr₂O₃) (or the layer containing only a chromia). This layer is referred to as the "chromia layer" below. The middle layer of the three layers contains Mn, Co, Fe, Cr, and O (or contains only Mn, Co, Fe, Cr, and O). This layer is referred to as a "first layer" below. The layer that is the closest to the bonding agent 300 (the layer in contact with the bonding agent 300) contains Mn, Co, Fe, and O (or contains only Mn, Co, Fe, and O). This layer is referred to as a "second layer" below.

The first and the second layers can be said to be reaction layers formed by the reaction between the spinel type material (MnCo₂O₄) and the stainless steel (containing Fe and Cr). It is presumed that these first and second layers are formed when the above-mentioned "bonding paste" is heat-treated at 850 °C with the bonding paste being interposed between the air electrode 140 (base layer 141 + outermost layer 142), which has already been heat-treated, and the interconnector 200.

The thickness of the chromia layer is 1 to 5 µm, the thickness of the first layer is 1 to 7 µm, and the thickness of the second layer is 3 to 10 µm. The thickness of each layer is calculated by analyzing the images of the electron scanning microscope and the images indicating the results of the element analysis described above.

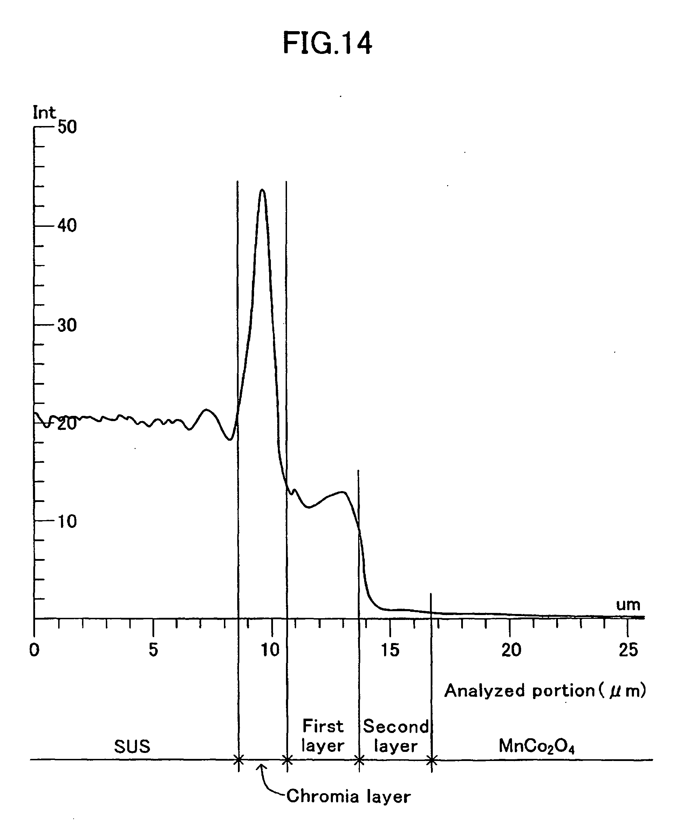

The Cr concentration in each of the chromia layer, and the first and second layers is analyzed. The Cr concentration is the volume concentration or the mass concentration of Cr (chrome) element in the layer. The result is described below. FIG. 14 is a graph illustrating one example of the result of the element analysis for Cr. In the element analysis, the portion to be analyzed is scanned along the thickness direction from the interconnector 200 (SUS) toward the bonding agent 300 (MnCo₂O₄) as indicated by a white arrow in FIG. 7. The axis of ordinate in FIG. 14 represents a diffraction intensity of Cr element. The diffraction intensity of Cr element is equivalent to the concentration of Cr element. This analytical result is also acquired with the use of a field-emission-type analytical microscope (JXA-8500F) made by JEOL Ltd.

As can be understood from FIG. 14, the maximum value of the Cr concentration in the chromia layer is greater than the Cr concentration in the interconnector 200, and the Cr concentration in the first layer moves within the range smaller than the Cr concentration in the interconnector 200. More specifically, the maximum value of the Cr concentration in the chromia layer is 1.5 to 4 times the average value of the Cr concentration in the interconnector 200. The Cr concentration in the first layer (the range from the minimum value to the maximum value) falls within the range 0.1 to 0.5 times the average value of the Cr concentration in the interconnector 200. The maximum value of the Cr concentration in the second layer is smaller than the minimum value of the Cr concentration in the first layer (including zero).

The feature of the "bonding portion between the bonding agent 300 and the interconnector 200" (see the Z portion in FIG. 1) in case where MnCo₂O₄ is used as the spinel type material constituting the bonding agent 300 has been described above. Even when the material other than MnCo₂O₄ (e.g., CuMn₂O₄) represented by the chemical formula of AB₂O₄ (A: at least one type of metal element selected from Mn and Cu, B: at least one type of metal element selected from Co and Mn) is used as the spinel type material constituting the bonding agent 300, it is confirmed that the three layers having the feature described above are formed at the bonding portion between the bonding agent 300 and the interconnector 200. For example, when CuMn₂O₄ is used as the spinel type material, the first layer becomes the layer containing Cu, Mn, Fe, Cr, and O (or containing only Cu, Mn, Fe, Cr, and O), and the second layer becomes the layer containing Cu, Mn, Fe, and O (or containing only Cu, Mn, Fe, and O).

### (Operation and Effect)

Next, an operation and effect of the bonding member according to the present embodiment, i.e., the bonding member bonded with the use of the bonding agent 300 formed by using powders of respective metal elements constituting the spinel type material as a starting material, will be described. In order to describe the operation and effect of the bonding agent 300, a bonding agent that is formed by using a powder of spinel type material, which is synthesized beforehand, as a starting material is prepared as a comparative example. The bonding agent according to the comparative example is formed as described below.

### <Comparative Example>

The bonding agent according to the comparative example is formed as described below. Firstly, the spinel type material (MnCo₂O₄) synthesized according to a predetermined process is pulverized by a pot mill, whereby powders of the spinel type material (complex oxide) are obtained. The diameter of the powder is 0.2 to 2 µm, and the average diameter is 0.5 µm. Ethyl cellulose serving as binder and terpineol serving as a solvent are added to this powder, according to need, to prepare a bonding paste. The outermost layer 142 and the interconnector 200 are bonded by using this paste, and this paste is dried for 1 hour at 100°C. Thereafter, the paste is sintered in air for 1 hour at a high temperature of 1000 °C, whereby the bonding agent, which is a sintered body, according to the comparative example is formed.

In the comparative example, if the sintering temperature of the paste is lowered as in the embodiment, the paste is not sufficiently densified. This is based upon the fact that, because the oxide paste, which has already been oxidized, is used in the comparative example, the growth action of the spinel type crystal by the heat caused by the oxidation reaction during when the paste is sintered cannot be expected, different from the above-mentioned embodiment.

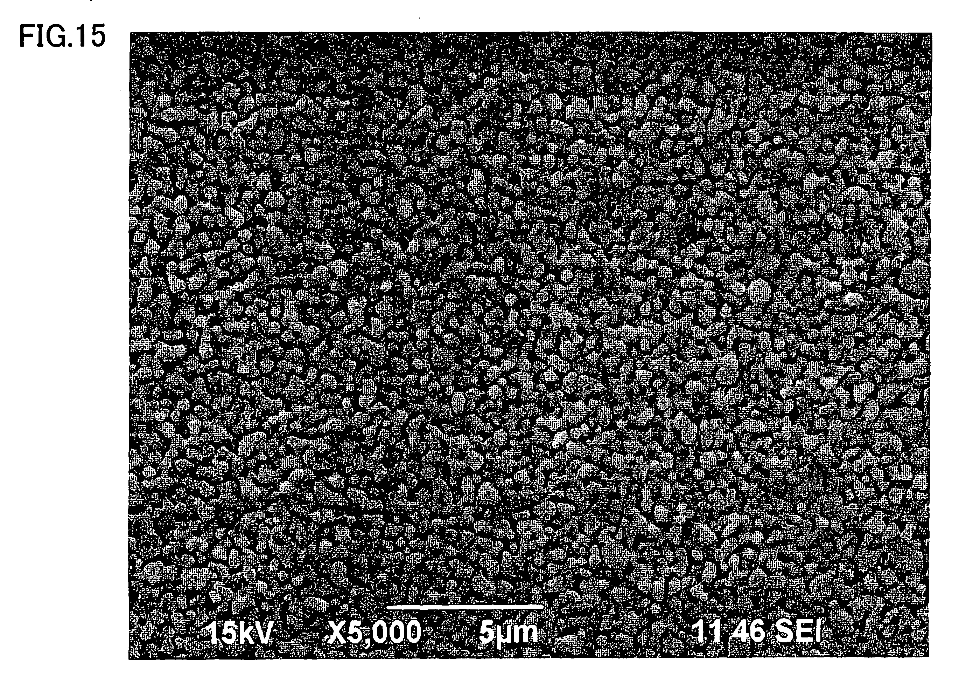

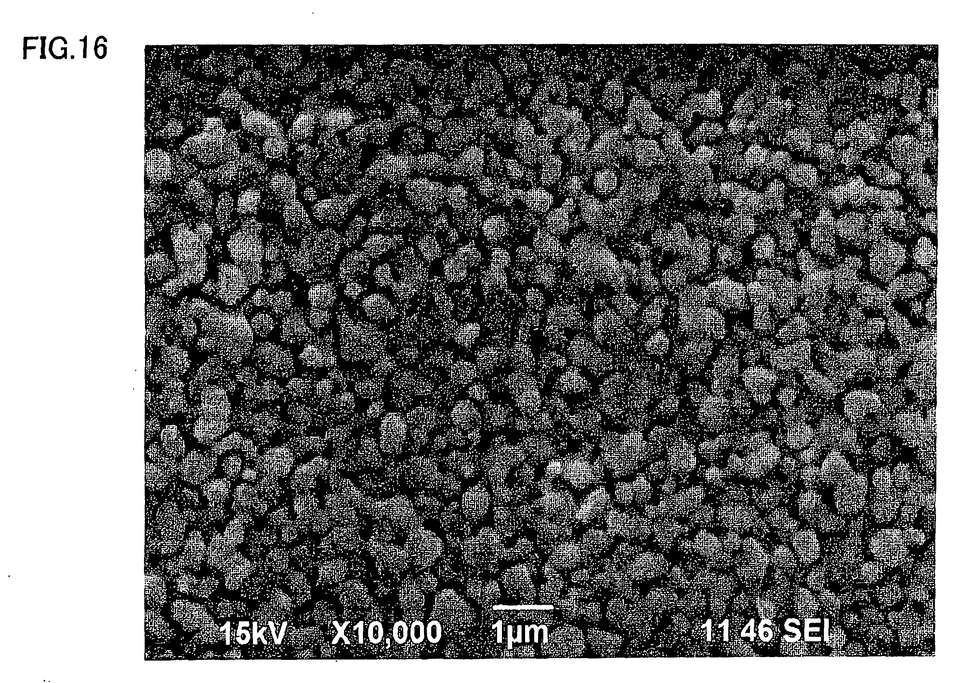

FIGS. 15 and 16 are views illustrating the surface of the bonding agent according to the comparative example that is observed at a magnification of 5000 and 10000 with a scanning electron microscope (SEM). As can be understood from FIGS. 15 and 16, the above-mentioned "particle" or "co-continuous structure" is not found in the bonding agent according to the comparative example, but instead of this, the structure in which the powders of the starting material are merely collected and sintered is found.

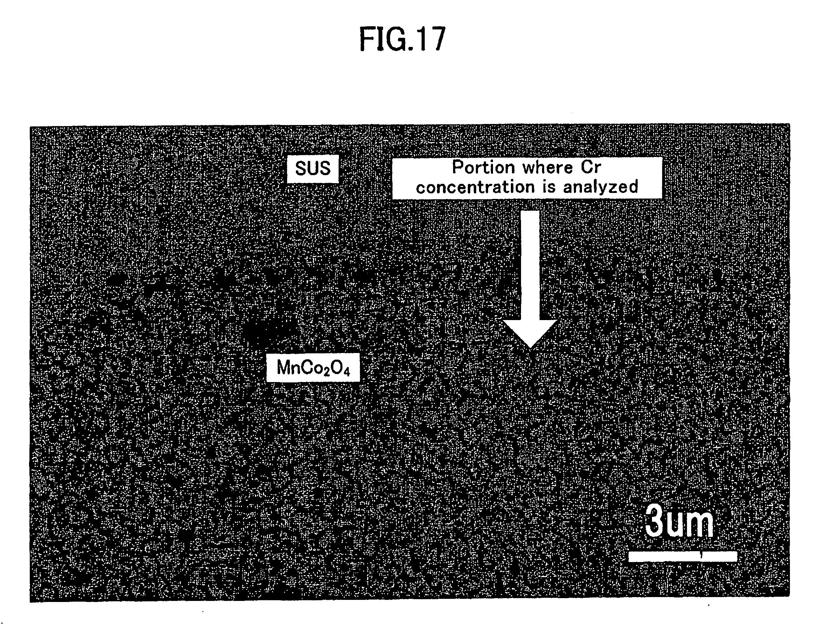

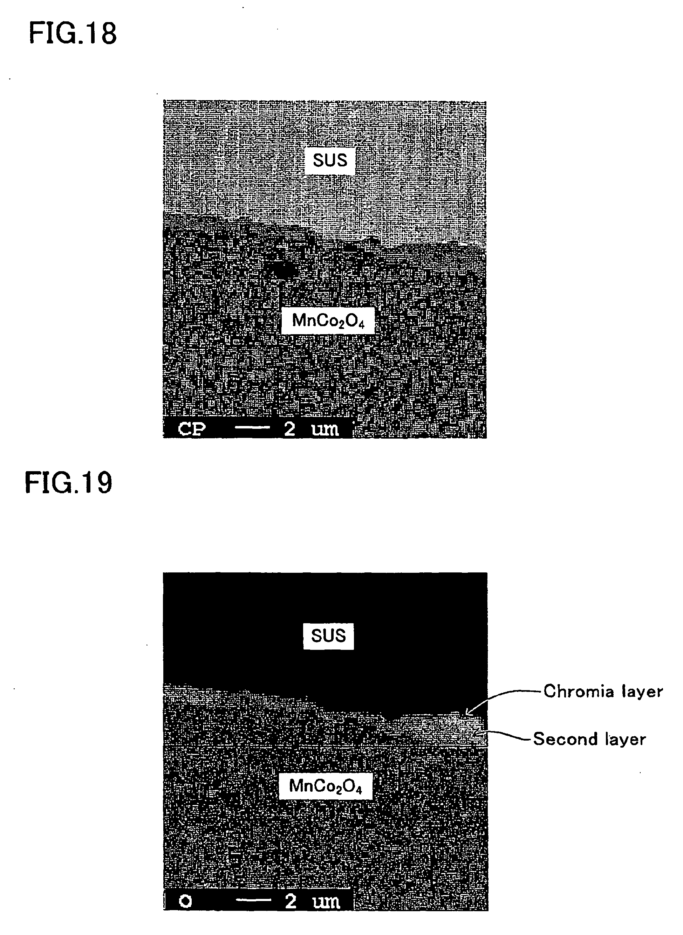

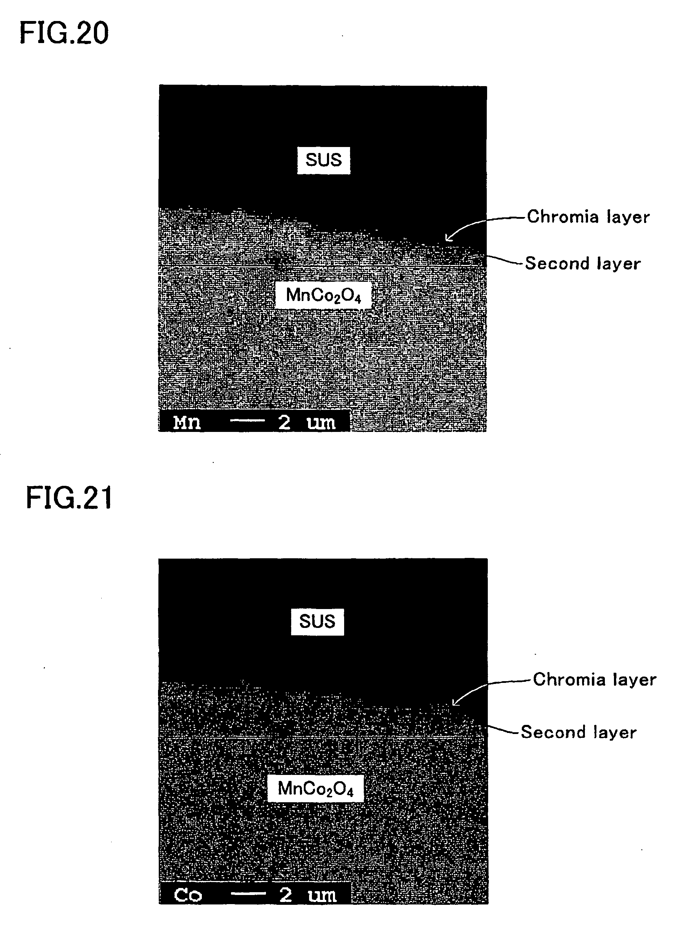

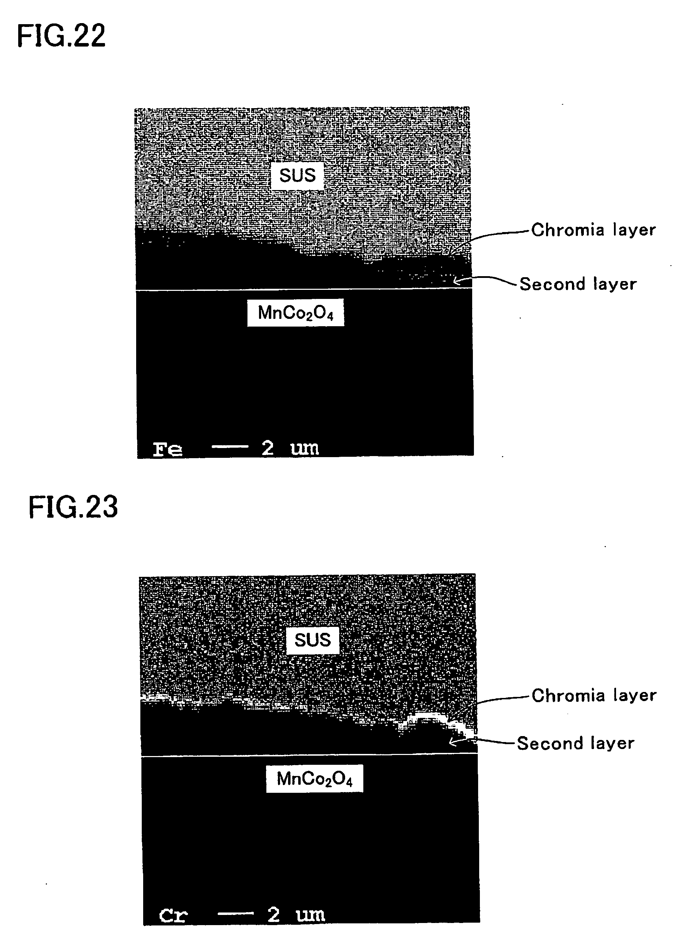

FIG. 17 is an example of an image of the cross-section of the vicinity of the bonding portion between the interconnector and the bonding agent in the bonding member according to the comparative example as observed at a magnification of 2000 with an electron emission type analytical electron microscope. The elements contained in the bonding portion are analyzed. The result is described below. FIG. 18 is a partial image including the bonding portion in the image in FIG. 17. An element analysis (element mapping) is carried out for the portion corresponding to the image in FIG. 18. FIGS. 19 to 23 respectively illustrate the results of the mapping of O (oxygen), the mapping of Mn (manganese), the mapping of Co (cobalt), the mapping of Fe (iron), and the mapping of Cr (chrome). These images and analytical results are acquired with the use of a field-emission-type analytical microscope (JXA-8500F) made by JEOL Ltd, as in the above-mentioned embodiment.

As can be understood from FIGS. 19 to 23, two layers are interposed at the bonding portion between the bonding agent 300 and the interconnector 200. Of these two layers, the layer that is the closest to the interconnector 200 (the layer in contact with the interconnector 200) mainly contains Cr and O. Specifically, this layer can be said to be the layer containing a chromia (Cr₂O₃) (or the layer containing only a chromia). This layer corresponds to the "chromia layer" described above. The layer that is the closest to the bonding agent 300 (the layer in contact with the bonding agent 300) contains Mn, Co, Fe, and O (or contains only Mn, Co, Fe, and O). This layer corresponds to the "second layer" described above. Specifically, in the comparative example, the layer corresponding to the chromia layer and the layer corresponding to the "second layer" are respectively formed, but the layer corresponding to the first layer in the above-mentioned embodiment is not formed.

The thickness of the chromia layer is 1 to 5 pm, and the thickness of the second layer is 3 to 10 µm. The thickness of each layer is measured as in the above-mentioned embodiment.

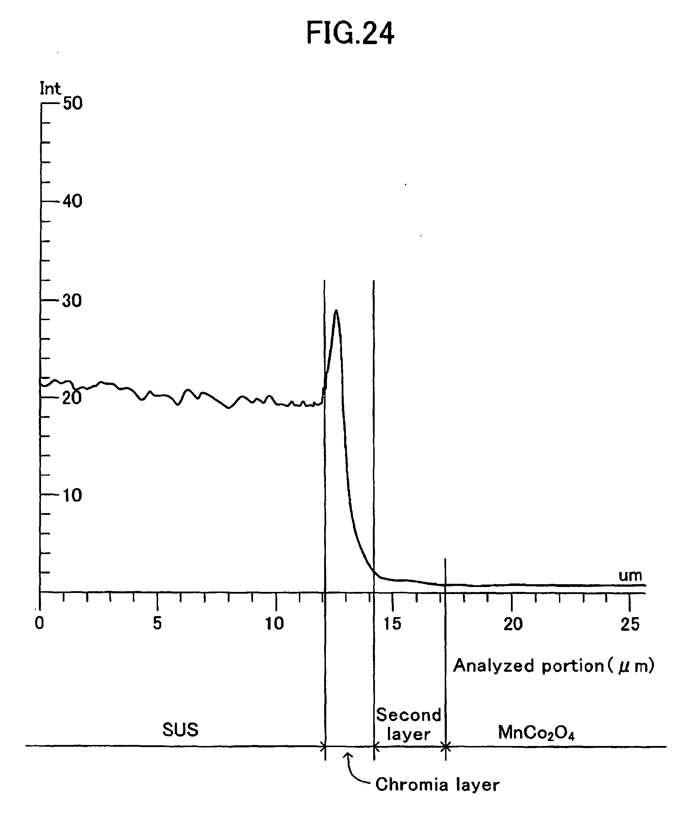

The Cr concentration in the chromia layer and the second layer in the comparative example is analyzed. FIG. 24 is a graph illustrating one example of the result of the element analysis for Cr. In the element analysis, the portion to be analyzed is scanned along the thickness direction from the interconnector 200 (SUS) toward the bonding agent 300 (MnCo₂O₄) as indicated by a white arrow in FIG. 17. This analytical result is also acquired with the use of a field-emission-type analytical microscope (JXA-8500F) made by JEOL Ltd.

As can be understood from FIG. 24, the maximum value of the Cr concentration in the chromia layer is greater than the Cr concentration in the interconnector 200 as in the above-mentioned embodiment. Specifically, the maximum value of the Cr concentration in the chromia layer falls within the range 1.2 to 2.5 times the average value of the Cr concentration in the interconnector 200. The maximum value of the Cr concentration in the second layer is sufficiently smaller than the average value of the Cr concentration in the interconnector 200 (including zero).

### <Evaluation of Boding Strength>

The present inventor has found that the bonding member according to the present embodiment has a bonding strength, between the interconnector 200 and the bonding agent, greater than that of the bonding member according to the comparative example. A test for confirming this finding will be described below.

In this test, plural samples, each of which had a different combination of the material of the bonding agent, the average diameter of the powder that was the starting material of the bonding agent, and the sintering temperature (heat-treatment temperature) during the formation of the bonding agent, were prepared for the respective bonding member according to the present embodiment and the bonding member according to the comparative example. Specifically, 18 types of standards (combinations) were prepared as illustrated in Table 1. 5 samples were prepared for the respective standards. In Table 1, those (standards 1 to 8, 12 to 15) in which the starting material is the powders (metal powders) of the respective metal elements constituting the spinel type material correspond to the present embodiment, while those (standards 9 to 11, 16 to 18) in which the starting material is the powder (ceramic powder) of the spinel type material that is synthesized beforehand correspond to the comparative example.

**Table 1**

| Standard | Bonding agent | Starting material | Average diameter (µm) | Heat-treatment temperature (°C) |
|---|---|---|---|---|
| 1 | MnCo₂O₄ | Metal powder | 2 | 800 |
| 2 | MnCo₂O₄ | Metal powder | 5 | 800 |
| 3 | MnCo₂O₄ | Metal powder | 12 | 800 |
| 4 | MnCo₂O₄ | Metal powder | 20 | 800 |
| 5 | MnCo₂O₄ | Metal powder | 2 | 850 |
| 6 | MnCo₂O₄ | Metal powder | 5 | 850 |
| 7 | MnCo₂O₄ | Metal powder | 12 | 850 |
| 8 | MnCo₂O₄ | Metal powder | 20 | 850 |
| 9 | MnCo₂O₄ | Ceramic powder | 0.5 | 1000 |
| 10 | MnCo₂O₄ | Ceramic powder | 0.8 | 1100 |
| 11 | MnCo₂O₄ | Ceramic powder | 1 | 1200 |
| 12 | CuMn₂O₄ | Metal powder | 2 | 800 |
| 13 | CuMn₂O₄ | Metal powder | 5 | 800 |
| 14 | CuMn₂O₄ | Metal powder | 2 | 850 |
| 15 | CuMn₂O₄ | Metal powder | 5 | 850 |
| 16 | CuMn₂O₄ | Ceramic powder | 0.5 | 1000 |
| 17 | CuMn₂O₄ | Ceramic powder | 0.8 | 1100 |
| 18 | CuMn₂O₄ | Ceramic powder | 1 | 1200 |

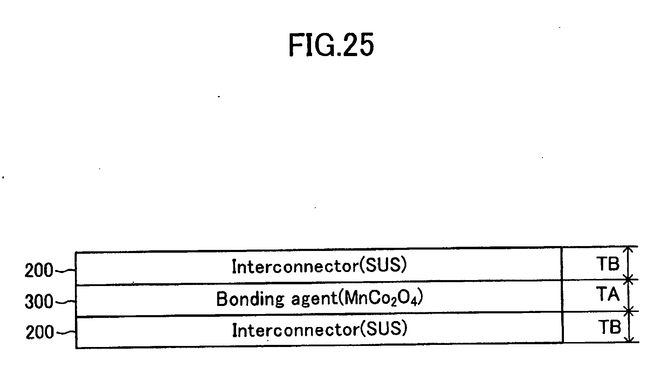

As illustrated in FIG. 25, in these samples, two interconnectors 200, which have the plate-like shape same as that of the cell 100 as viewed from the top, are bonded by the bonding agent all over the bonding surface.

In these samples, the thickness TA of the bonding agent is 200 µm, and the thickness TB of the interconnector 200 is 450 pm, those of which are constant. The shape of each of the samples viewed from the top is a circle having a diameter of 5 cm.

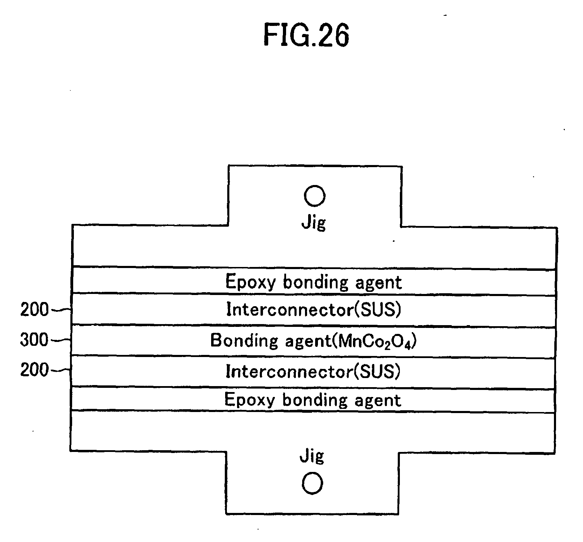

As illustrated in FIG. 26, a jig for a tensile test was adhered on the upper and lower surfaces of each sample respectively with epoxy resin. A thermosetting epoxy bonding agent (trade name: TB2222P) by Three Bond Co., Ltd., having a great bonding force, was used as the epoxy resin. The epoxy resin having the great bonding force was used in order to obtain a bonding strength greater than the bonding strength at the bonding portion by the bonding agent. The condition (bonding condition) for curing the epoxy resin was 100°C for 60 minutes.

When force for separating the upper and lower jigs in the vertical direction was applied, tensile force in the vertical direction was applied to each sample. The magnitude of the tensile force (hereinafter referred to as "tensile strength") when the bonding portion by the bonding agent was destroyed was measured. The portion (the weakest portion) destroyed in the samples according to the present embodiment (standards 1 to 8, 12 to 15) was the bonding portion (interface) between the interconnector 200 and the bonding agent, while the portion destroyed in the samples according to the comparative example (standards 9 to 11, 16 to 18) is the inside of the bonding agent. Table 2 shows the result.

**Table 2**

| Standard | Tensile strength (MPa) | Destroyed portion |
|---|---|---|
| 1 | 52 | Interface of bonding agent/ interconnector |
| 2 | 47 | Interface of bonding agent/ interconnector |
| 3 | 43 | Interface of bonding agent! interconnector |
| 4 | 56 | Interface of bonding agent/ interconnector |
| 5 | 50 | Interface of bonding agent/ interconnector |
| 6 | 47 | Interface of bonding agent/ interconnector |
| 7 | 52 | Interface of bonding agent/ interconnector |
| 8 | 46 | Interface of bonding agent/ interconnector |
| 9 | 23 | Inside of bonding agent |
| 10 | 25 | Inside of bonding agent |
| 11 | 21 | Inside of bonding agent |
| 12 | 46 | Interface of bonding agent/ interconnector |
| 13 | 42 | Interface of bonding agent/ interconnector |
| 14 | 43 | Interface of bonding agent/ interconnector |
| 15 | 47 | Interface of bonding agent/ interconnector |
| 16 | 18 | Inside of bonding agent |
| 17 | 23 | Inside of bonding agent |
| 18 | 17 | Inside of bonding agent |

As can be understood from Table 2, the bonding member according to the present embodiment tends to have the tensile strength greater than that of the bonding member according to the comparative example. Specifically, it can be said that the bonding member according to the present embodiment has a bonding strength between the interconnector 200 and the bonding agent greater than the bonding strength of the bonding member according to the comparative example.

As described above, the bonding member according to the present embodiment, which uses the bonding agent formed by using powders of the respective metal elements (Mn, Co) constituting the spinel type material (MnCo₂O₄, etc.) as a starting material, has greater bonding strength between the interconnector and the bonding agent compared to the bonding member according to the comparative example, which uses the bonding agent formed by using powders of spinel type material (MnCo₂O₄) synthesized beforehand as the starting material. Specifically, according to the bonding member of the present embodiment, the paste is sufficiently densified even if the sintering temperature is set to be relatively low (e.g., 700 to 900 °C), whereby the bonding member having sufficiently great bonding strength can be obtained.

## Claims

1. A bonding member comprising:
a first conductive connection member made of a metal material containing Fe and Cr;
a second conductive connection member different from the first conductive connection member; and
a bonding agent that is formed to include a transition metal oxide having a spinel type crystal structure represented by a chemical formula AB₂O₄ (A: at least one type of metal element selected from Mn and Cr, B: at least one type of metal element selected from Co and Mn), and that bonds the first and second conductive connection members to each other and electrically connects the first and second conductive connection members to each other, **characterized in that**
a first layer having a thickness of 1 to 7 µm and containing elements of A, B, Fe, Cr, and O is interposed at the bonding portion between the bonding agent and the first conductive connection member, wherein the Cr concentration in the first layer falls within the range 0.1 to 0.5 times the average value of the Cr concentration in the first conductive connection member.

2. A bonding member according to claim 1, **characterized in that**
a chromia layer having a thickness of 1 to 5 µm and containing Cr₂O₃ is interposed at the side closer to the first conductive connection member than the first layer, wherein the maximum value of the Cr concentration in the chromia layer falls within the range 1.5 to 4 times the average value of the Cr concentration in the first conductive connection member.

3. A bonding member according to claim 1 or claim 2, **characterized in that**
a second layer having a thickness of 3 to 10 µm and containing elements of A, B, Fe, and O is interposed at the side closer to the bonding agent than the first layer, wherein the maximum value of the Cr concentration in the second layer is smaller than the minimum value of the Cr concentration in the first layer.

4. A bonding member according to any one of claims 1 to 3, **characterized in that**
the bonding agent is formed by sintering a paste, which contains a mixture of powders of A and B elements, with the paste being interposed between the first and second conductive connection members.

5. A bonding member according to any one of claims 1 to 4, **characterized in that**
the bonding agent includes a noble metal in addition to the transition metal oxide.

6. A bonding member according to any one of claims 1 to 5, **characterized in that**
the second conductive connection member is an air electrode in a cell of a solid oxide fuel cell that includes a solid electrolyte, a fuel electrode, which is arranged integral with the solid electrolyte and allows a fuel gas to react through the contact with the fuel gas, and an air electrode, which is arranged integral with the solid electrolyte and allows a gas containing oxygen to react through the contact with the gas containing oxygen, and
the first conductive connection member is an interconnector that electrically connects the air electrode and an external conductive member.

## Patentansprüche

1. Bindeelement, umfassend:
ein erstes leitendes Verbindungselement aus einem metallischen Material, das Fe und Cr enthält;
ein zweites leitendes Verbindungselement, das sich vom ersten leitenden Verbindungselement unterscheidet; und
ein Bindemittel, das so ausgebildet ist, dass es ein Übergangsmetalloxid mit einer Kristallstruktur vom Spinelltyp enthält, die durch eine chemische Formel AB₂O₄ (A: zumindest eine Art von metallischem Element, ausgewählt aus Mn und Cr, B: zumindest eine Art von metallischem Element, ausgewählt aus Co und Mn) dargestellt ist, und welches das erste und das zweite leitende Verbindungselement aneinander bindet und das erste und das zweite leitende Verbindungselement elektrisch miteinander verbindet, **dadurch gekennzeichnet, dass**
eine erste Schicht mit einer Dicke von 1 bis 7 µm, welche die Elemente A, B, Fe, Cr und O enthält, am Bindungsabschnitt zwischen dem Bindemittel und dem ersten leitenden Verbindungselement zwischengeschichtet ist, wobei die Cr-Konzentration in der ersten Schicht im Bereich von 0,1- bis 0,5-mal dem mittleren Wert der Cr-Konzentration im ersten leitenden Verbindungselement entspricht.

2. Bindeelement nach Anspruch 1, **dadurch gekennzeichnet, dass**
eine Chromoxidschicht mit einer Dicke von 1 bis 5 µm, die Cr₂O₃ enthält, an der Seite zwischengeschichtet ist, die näher beim ersten leitenden Verbindungselement ist als die erste Schicht, wobei der Maximalwert der Cr-Konzentration in der Chromoxidschicht im Bereich von 1,5- bis 4-mal dem Mittelwert der Cr-Konzentration im ersten leitenden Verbindungselement liegt.

3. Bindeelement nach Anspruch 1 oder Anspruch 2, **dadurch gekennzeichnet, dass**
eine zweite Schicht mit einer Dicke von 3 bis 10 µm, welche die Elemente A, B, Fe und O enthält, an der Seite zwischengeschichtet ist, die näher beim Bindemittel ist als die erste Schicht, wobei der Maximalwert der Cr-Konzentration in der zweiten Schicht kleiner ist als der Minimalwert der Cr-Konzentration in der ersten Schicht.

4. Bindeelement nach einem der Ansprüche 1 bis 3, **dadurch gekennzeichnet, dass**
das Bindemittel durch Sintern einer Paste gebildet ist, die ein Gemisch aus Pulvern der Elemente A und B enthält, wobei die Paste zwischen dem ersten und dem zweiten leitenden Verbindungselement zwischengeschichtet ist.

5. Bindeelement nach einem der Ansprüche 1 bis 4, **dadurch gekennzeichnet, dass**
das Bindemittel zusätzlich zum Übergangsmetalloxid ein Edelmetall enthält.

6. Bindeelement nach einem der Ansprüche 1 bis 5, **dadurch gekennzeichnet, dass**
das zweite leitende Verbindungselement eine Luftelektrode in einer Zelle einer Festoxidbrennstoffzelle ist, die einen Festelektrolyt, eine Brennstoffelektrode, die einstückig mit dem Festelektrolyt angeordnet ist und es dem Brenngas erlaubt, durch Kontakt mit dem Brenngas zu reagieren, und eine Luftelektrode, die einstückig mit dem Festelektrolyt angeordnet ist und es einem Sauerstoff enthaltenden Gas erlaubt, durch Kontakt mit dem Sauerstoff enthaltenden Gas zu reagieren, umfasst, und
das erste leitende Verbindungselement ein Zwischenverbinder ist, der die Luftelektrode und ein externes leitendes Element elektrisch verbindet.

## Revendications

1. Elément de liaison comprenant :
un premier élément de connexion conducteur fabriqué à partir d'un matériau métallique contenant du Fe et du Cr ;
un second élément de connexion conducteur différent du premier élément de connexion conducteur ; et
un matériau de liaison qui est formé de sorte à contenir un oxyde de métal de transition ayant une structure cristalline de type spinelle représentée par une formule chimique AB₂O₄ (A : au moins un type d'élément métallique choisi entre Mn et Cr, B : au moins un type d'élément métallique choisi entre Co et Mn), et qui lie les premier et second éléments de connexion conducteurs l'un à l'autre et connecte électriquement les premier et second éléments de connexion conducteurs l'un à l'autre, **caractérisé en ce que**
une première couche ayant une épaisseur de 1 à 7 µm et contenant des éléments de A, B, Fe, Cr, et O est intercalée au niveau de la partie de liaison entre le matériau de liaison et le premier élément de connexion conducteur, dans lequel la concentration de Cr dans la première couche se trouve dans la plage de 0,1 à 0,5 fois la valeur moyenne de la concentration de Cr dans le premier élément de connexion conducteur.

2. Elément de liaison selon la revendication 1, **caractérisé en ce que**
une couche d'oxyde de chrome ayant une épaisseur de 1 à 5 µm et contenant du Cr₂O₃ est intercalée sur le côté plus proche du premier élément de connexion conducteur que la première couche, dans lequel la valeur maximale de la concentration de Cr dans la couche d'oxyde de chrome se trouve dans la plage de 1,5 à 4 fois la valeur moyenne de la concentration de Cr dans le premier élément de connexion conducteur.

3. Elément de liaison selon la revendication 1 ou la revendication 2, **caractérisé en ce que**
une seconde couche ayant une épaisseur de 3 à 10 dam et contenant des éléments de A, B, Fe et O est intercalée sur le côté plus proche du matériau de liaison que la première couche, dans lequel la valeur maximale de la concentration de Cr dans la seconde couche est inférieure à la valeur minimale de la concentration de Cr dans la première couche.

4. Elément de liaison selon l'une quelconque des revendications 1 à 3, **caractérisé en ce que**
le matériau de liaison est formé en frittant une pâte, qui contient un mélange de poudres d'éléments A et B, la pâte étant intercalée entre les premier et second éléments de connexion conducteurs.

5. Elément de liaison selon l'une quelconque des revendications 1 à 4, **caractérisé en ce que**
le matériau de liaison contient un métal noble en plus de l'oxyde de métal de transition.

6. Elément de liaison selon l'une quelconque des revendications 1 à 5, **caractérisé en ce que**
le second élément de connexion conducteur est une électrode oxydoréductrice dans une cellule d'une pile à combustible à oxyde solide qui comprend un électrolyte solide, une électrode à combustible, qui est d'un seul tenant avec l'électrolyte solide et permet à un gaz combustible de réagir par contact avec le gaz combustible, et une électrode oxydoréductrice, qui est d'un seul tenant avec l'électrolyte solide et permet à un gaz contenant de l'oxygène de réagir par contact avec le gaz contenant l'oxygène, et
le premier élément de connexion conducteur est un interconnecteur qui connecte électriquement l'électrode oxydoréductrice et un élément conducteur externe.
